# EUROPEAN PATENT SPECIFICATION

(11) **EP 3 493 439 B1**
(45) Date of publication and mention of the grant of the patent: **07.10.2026**
(21) Application number: 17838739.5
(22) Date of filing: 09.08.2017
(51) Int. Cl.: H04L 1/00, H04B 7/06, H04L 5/00

(54) **DATA TRANSMISSION METHOD, TRANSMITTING DEVICE, AND RECEIVING DEVICE**
DATENÜBERTRAGUNGSVERFAHREN, SENDEVORRICHTUNG UND EMPFANGSVORRICHTUNG
PROCÉDÉ DE TRANSMISSION DE DONNÉES, DISPOSITIF DE TRANSMISSION ET DISPOSITIF DE RÉCEPTION

(30) Priority: 12.08.2016 CN 201610666674
(43) Date of publication of application: 05.06.2019
(73) Proprietor: Huawei Technologies Co., Ltd., Longgang District Shenzhen, Guangdong 518129 (CN)
(72) Inventor: LIU, Jianqin, Shenzhen Guangdong 518129 (CN)
(74) Representative: Thun, Clemens
(86) International application number: PCT/CN2017/096665
(87) International publication number: WO 2018/028609

(56) References cited:
- WO-A1-2015/096423
- CN-A- 101 577 572
- CN-A- 102 651 677
- CN-A- 104 184 561
- CN-A- 104 202 073
- US-A1- 2010 118 817
- US-A1- 2012 003 945
- US-A1- 2015 195 819
- HUAWEI: "MIMO feedback signalling", 3GPP DRAFT; R1-074752, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Korea; 20071030, 30 October 2007 (2007-10-30), XP050108223
- "3rd Generation Partnership Project; Technical Specification Group Radio Access Network; Evolved Universal Terrestrial Radio Access (E-UTRA); Physical channels and modulation (Release 13)", 3GPP STANDARD; 3GPP TS 36.211, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V13.2.0, 1 July 2016 (2016-07-01), pages 1 - 168, XP051123204, [retrieved on 20160701]

## Description

### TECHNICAL FIELD

Embodiments of the present invention relate to the communications field, and in particular, to a data transmission method, and a sending device.

### BACKGROUND

In a downlink system of the 3GPP (the 3^{rd} Generation Partnership Project, the 3^{rd} Generation Partnership Project) LTE (Long Term Evolution, Long Term Evolution) R10 (Release 10, Release 10), UE (User Equipment, user equipment) performs channel state information measurement by using a CSI-RS (Channel State Information-Reference Signal, channel state information-reference signal) and obtains channel state information CSI based on a measurement result. The CSI includes an RI (Rank Indicator, rank indicator), a PMI (Precoding Matrix Indication, precoding Indicator), a CQI (Channel Quality Indicator, channel quality indicator), and the like. The rank indicator reflects a quantity of space layers of a channel.

Currently, rank indicators in entire system bandwidth are the same. To be specific, subbands of the entire bandwidth have a common rank indicator. In addition, corresponding data transmission based on a common rank specifically includes: code-word-to-layer mapping, determining of a transmission block size, and link adaptation. As the system bandwidth dramatically increases, it is found after measurement on channel state information that distribution of ranks of the entire bandwidth presents subband characteristics. To be specific, different subbands may have different rank indicators. For example, a rank of a subband 1 is 1, a rank of a subband 2 is 3, and a rank of a subband 3 is 2. The subbands herein may be subbands different from subbands in an LTE CSI measurement feedback, such as large subbands corresponding to larger subband sizes. For example, one of the large subbands corresponds to 48 or 50 physical resource blocks.

Currently, in a high bandwidth scenario, a transmit end performs data transmission based on the common rank indicator of the entire bandwidth. Because the common rank indicator cannot satisfy requirements of different subbands, a data transmission effect is relatively poor, and system performance is greatly deteriorated.

Further, prior art document R1-07452, TSG RAN WG1 meeting #51, refers to MIMO feedback signaling. Further, prior art document US 2012/0003945 A1 refers to a mobile station for
use in a wireless network. The mobile station is operable to transmit feedback values to a base station of the wireless network. The feedback values include a first precoder matrix indicator (PMI1) value and a second precoder matrix indicator (PMI2) value. The mobile station transmits the PMI2 value to the base station in the same subframe as a channel quality indicator (CQI) value. The CQI value may be either a wideband CQI value or a subband CQI value. Further, US 2010/0118817 A1 refers to a wireless communication system facilitating multichannel periodic and aperiodic feedback (e.g., Channel Quality Indicator (CQI), Rank indicator (RI), Precoding Matrix Indicator (PMI)) from a population of user equipment while facilitating legacy single carrier communication. Paired downlink (DL)/uplink (UL) or many-to-one mapping communication can be established by common system information or dedicated signaling. In one aspect, a flag sent by system information or by dedicated signaling can indicate which means controls. Feedback can be configured for each carrier independently reported in a concatenated in frequency fashion, reported in a cycle in time fashion, or reported in a staggered in time and frequency fashion. Feedback can be reported jointly as one wide bandwidth. Feedback can be a single report perhaps reported on a data channel for more capacity or by cycled carrier/subband reporting.

### SUMMARY

Embodiments of the present invention provide a data transmission method, and a sending device. In a high bandwidth scenario, data transmission based on different rank indicators of different subbands can maximally satisfy transmission requirements of different subbands, to improve a system throughput.

This problem is solved by the subject matter of the independent claims.

### BRIEF DESCRIPTION OF DRAWINGS

FIG. 1 is an architectural diagram of an exemplary communications system;
FIG. 2 is a schematic flowchart of data transmission in an exemplary communications system;
FIG. 3 is a schematic flowchart of a data transmission method according to an embodiment of the present invention;
FIG. 4 is a structural block diagram of a sending device according to an embodiment of the present invention;
FIG. 5 is another structural block diagram of a sending device according to an embodiment of the present invention;
FIG. 6 is a structural block diagram of an exemplary receiving device; and
FIG. 7 is another structural block diagram of an exemplary receiving device.

### DESCRIPTION OF EMBODIMENTS

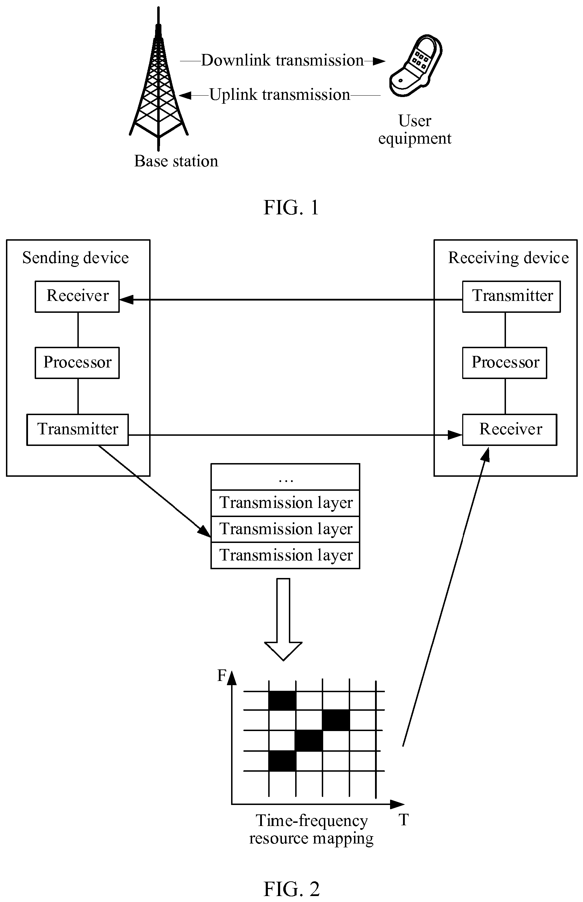

In a communications system shown in FIG. 1, a base station and UE (User Equipment, user equipment) perform channel sounding or signal demodulation by using a reference signal, to perform data transmission. Usually, a signal sent by the base station to the UE is referred to as a downlink signal, and data sent by the UE to the base station is referred to as an uplink signal. Common reference signal in communication between the base station and the UE include the following two types: one type of reference signal is used to perform coherent demodulation on a received signal including control information or data, and for example, is a DMRS (Demodulation Reference Signal, demodulation reference signal) in a 3GPP (the 3^{rd} Generation Partnership Project, the 3^{rd} Generation Partnership Project) LTE (Long Term Evolution, Long Term Evolution) R10 (Release 10, Release 10) downlink system; the other type of reference signal is used to measure a channel state or channel quality, to schedule the UE, and for example, is a CSI-RS (Channel State Information-Reference Signal, channel state information-reference signal).

The UE obtains a channel quality measurement result based on the CSI-RS, to obtain channel state information CSI from the channel quality measurement result. The CSI includes a rank indicator, a precoding indication, a channel quality indicator (CQI: Channel Quality Indicator), and the like. The rank indicator reflects a quantity of space layers of a channel.

With development and use of more and higher frequency spectrums, system bandwidth dramatically increases, and it is found through channel state information measurement on ten 10 MHz subbands of a bandwidth of 100 MHz that, rank indicators of the subbands of the entire system bandwidth present subband characteristics. To be specific, the rank indicators of the subbands are not totally the same. For example, a rank of a subband 1 is 1, a rank of a subband 2 is 3, and a rank of a subband 3 is 2. Based on the subband characteristics of the rank indicators, correspondingly, code-word-to-layer mapping, link adaptation, transmission block sizes, and the like that correspond to the subbands also present the subband characteristics.

In the prior art, rank indicators in entire system bandwidth are the same. To be specific, the entire bandwidth has a common rank indicator. A sending device determines a transmission block size of each subband based on the common rank indicator of the entire bandwidth and maps, based on the common rank indicator, a code word corresponding to a transmission block of each subband to a transmission layer. However, in the foregoing high bandwidth scenario, if a transmit end still performs data transmission based on a common rank indicator of the entire bandwidth, because the common rank indicator cannot satisfy performance maximization requirements of different subbands, a data transmission effect is relatively poor, and system performance is greatly deteriorated.

A principle of the present invention lies in: that the sending device no longer performs data transmission based on the common rank indicator includes that the sending device no longer determines, based on the common rank indicator, the transmission block size corresponding to each subband nor maps the transmission block to the transmission layer based on the common rank indicator, but determines, based on a rank indicator of each subband, the transmission block size corresponding to the subband and maps, based on the rank indicator of the subband, the transmission block to the transmission layer corresponding to the subband. Quantities of transmission layers that correspond to the subbands herein are not totally the same. In this way, differential transmission processing is performed on the subbands based on the rank indicators not totally the same that are of the subbands, to satisfy maximum performance requirements, thereby improving a data transmission effect.

As shown in FIG. 2, a communications system includes a sending device and a receiving device. The sending device may be a base station, and the receiving device may be a terminal. The sending device includes a transmitter, a processor, and a receiver. The receiving device includes a receiver, a processor, and a transmitter. The sending device sends data and control signaling to the receiving device by using the transmitter, and the receiving device may receive, by using the receiver of the receiving device, the control signaling and data that are sent by the sending device. The receiving device may determine a transmission layer and a time-frequency resource that correspond to the data based on the control signaling, to receive the data on the corresponding time-frequency resource. Similarly, the receiving device sends data and control signaling to the sending device by using the transmitter, and the sending device may receive, by using the receiver of the sending device, the control signaling and data that are sent by the receiving device.

Specifically, the processor may be a central processing unit (English: central processing unit, CPU for short).

A memory is configured to store program code and transmit the program code to the processor, so that the processor executes the following instruction based on the program code. The memory may include a volatile memory (volatile memory), such as a RAM (random access memory, random access memory). The memory may further include a non-volatile memory (non-volatile memory), such as a ROM (read-only memory, read-only memory), a flash memory (flash memory), an HDD (hard disk drive, hard disk drive), or an SSD (solid-state drive, solid-state drive). The memory may further include a combination of the foregoing types of memories.

The transmitter may be implemented by an optical transmitter, an electrical transmitter, a wireless transmitter, or any combination thereof. For example, the optical transmitter may be an SFP (small form-factor pluggable transceiver, small form-factor pluggable) transmitter (transceiver), an SFP+ (enhanced small form-factor pluggable, enhanced small form-factor pluggable) transmitter, or an XFP (10 Gigabit small form-factor pluggable, 10 Gigabit small form-factor pluggable) transmitter. The electrical transmitter may be a NIC (network interface controller, network interface controller) of the Ethernet (Ethernet). The wireless transmitter may be a WNIC (wireless network interface controller, wireless network interface controller).

The receiver may be implemented by an optical receiver, an electrical receiver, a wireless receiver, or any combination thereof. For example, the optical receiver may be a small form-factor pluggable receiver, an enhanced small form-factor pluggable receiver, or a 10 Gigabit small form-factor pluggable receiver. The electrical receiver may be an Ethernet network interface controller. The wireless receiver may be a wireless network interface controller.

In downlink data transmission, the sending device may be a base station or transmission point devices of other types, and the receiving device may be a terminal or other devices capable of implementing similar functions. In uplink data transmission, the sending device may be a terminal or other devices capable of implementing similar functions, and the receiving device may be a base station or transmission point devices of other types. Certainly, the sending device and the receiving device are not limited to the foregoing two devices.

The base station may be an eNB (or e-NodeB) (Evolved NodeB, evolved NodeB), a macro base station, a micro base station (also referred to as "a small cell"), a picocell base station, an AP (Access Point, access point), a TP (Transmission Point, transmission point), or the like in an LTE system or an evolved system of the LTE system, or may be a base station in a future network, such as a base station in a 5G network.

The terminal may also be referred to as user equipment (UE), or may be referred to as a terminal, an MS (Mobile Station, mobile station), a mobile terminal (Mobile Terminal), and the like. The terminal may communicate with one or more core networks by using a RAN (Radio Access Network, radio access network). For example, the terminal may be a mobile phone (also referred to as a "cellular" phone) or a computer having a mobile terminal. For example, the terminal may alternatively be a portable, pocket-sized, handheld, computer built-in, or in-vehicle mobile apparatus, which exchanges voice and/or data with the radio access network. The terminal may alternatively be a D2D (Device to Device, device to device) terminal or an M2M (Machine to Machine, machine to machine) terminal.

For ease of description, the following embodiments are described mainly by using an example in which a base station is used as the sending device for downlink data transmission and a terminal is used as the receiving device for downlink data transmission. Optionally, the sending device may alternatively be a terminal, and the receiving device may alternatively be a base station. This is not limited herein.

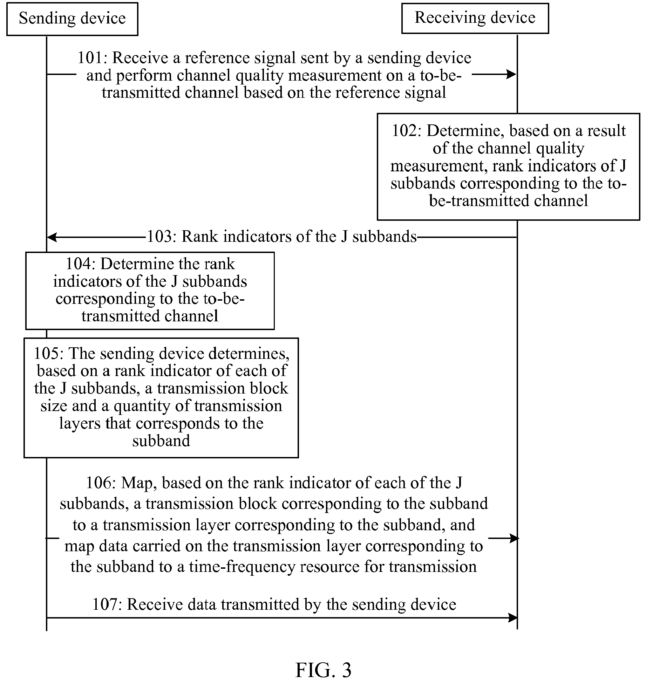

An embodiment of the present invention provides a data transmission method. As shown in FIG. 3, the method includes the following steps.

101: A receiving device receives a reference signal sent by a sending device and performs channel quality measurement on a to-be-transmitted channel based on the reference signal.

The reference signal herein may be a CSI-RS, and a result of the channel sounding includes a rank indicator, a PMI precoding matrix indication, a CQI, and the like.

102: The receiving device determines, based on a result of the channel quality measurement, rank indicators of J subbands corresponding to the to-be-transmitted channel.

The rank indicators of the J subbands present subband characteristics, and the rank indicators of the J subbands are not totally the same. In addition, J is an integer greater than or equal to 2.

In addition, the J subbands are M physical subbands corresponding to the to-be-transmitted channel. In this case, J is equal to M. Alternatively, the J subbands include at least one group of subbands having a same rank in the M physical subbands, the group of subbands having the same rank are at least two physical subbands whose rank indicators are the same in the M physical subbands, and J is less than M. However, a quantity of subbands obtained through division is relatively great and the sending device needs to notify a quantity of layers for spatial multiplexing (that is, a rank) and a modulation and coding scheme (that is, an MCS) of each subband. Therefore, when a quantity of subbands obtained by dividing entire system bandwidth is relatively great, enormous signaling overheads are required. The subbands having the same rank are divided into a same virtual subband for same processing, so that overheads of notification signaling can be greatly reduced.

The J subbands may be J subbands predefined based on the system bandwidth. For example, there are different quantities of subbands in different system bandwidth. Usually, higher system bandwidth indicates greater J. Optionally, in another implementation, the J subbands may be J subbands notified by the base station by using higher layer signaling or physical layer control signaling. This is not limited herein.

Optionally, the M physical subbands may alternatively be M physical subbands predefined based on the system bandwidth. For example, there are different quantities of physical subbands in different system bandwidth. Usually, higher system bandwidth indicates greater M. Optionally, in another implementation, the M physical subbands may be M physical subbands notified by the base station by using higher layer signaling or physical layer control signaling. This is not limited herein.

103: The receiving device reports the rank indicators of the J subbands to the sending device.

104: The sending device determines the rank indicators of the J subbands corresponding to the to-be-transmitted channel.

Herein, the sending device may determine the rank indicators of the J subbands based on the rank indicators reported by the receiving device that are of the J subbands corresponding to the to-be-transmitted channel. Alternatively, the sending device may determine, based on channel quality measurement on a received reference signal, the rank indicators of the J subbands corresponding to the to-be-transmitted channel.

105: The sending device determines, based on a rank indicator of each of the J subbands, a transmission block size and a quantity of transmission layers that corresponds to the subband.

The transmission block size herein is a total transmission block size corresponding to the J subbands, that is, a sum of transmission block sizes corresponding to the J subbands. Alternatively, the transmission block size may be a transmission block size corresponding to each of the J subbands. Based on the above, the sending device may determine the transmission block size in the following two manners.

Manner 1: First, a rank indicator of the i^{th} (where i is an integer greater than or equal to 1 and less than or equal to J) subband in the J subbands is used as a quantity of transmission layers that corresponds to the i^{th} subband; a CQI corresponding to the i^{th} subband is determined based on the rank indicator of the i^{th} subband, and modulation and coding information corresponding to the i^{th} subband is determined based on the CQI corresponding to the i^{th} subband. In addition, a transmission block size corresponding to the i^{th} subband is determined based on the quantity of transmission layers that corresponds to the i^{th} subband, the modulation and coding information corresponding to the i^{th} subband, and a quantity of scheduling resource blocks that corresponds to the i^{th} subband.

For example, a predefined transmission block size (Transmission Block Size, TBS) table may be searched based on the quantity NPRB_i of scheduling resource blocks, the modulation and coding information MCS_i, and a quantity RI _i of layers for spatial multiplexing on the i^{th} subband to determine a subtransmission block size TBS (i) on the i^{th} subband. In this solution, a new TBS table does not need to be designed. When a size of a subband is equal to that of system bandwidth of an LTE system, a TBS table in an existing long term evolution (Long Term Evolution, LTE) system can be completely reused. For example, if a subband has a size of 10 MHz, a TBS table corresponding to a system having a bandwidth of 10 MHz in existing LTE may be reused.

Manner 2: The transmission block size corresponding to the J subbands is determined based on the transmission block size corresponding to each of the J subbands. For example, the transmission block size corresponding to the J subbands may be the sum of the transmission block sizes corresponding to the subbands.

For example, the transmission block size TBS = TBS (1) + TBS (i) + ... +TBS (J), where a value of i is any one of positive integers greater than or equal to 1 and less than or equal to J.

Certainly, the transmission block size corresponding to each subband may be determined based on the foregoing method. Details are not described herein.

106: The sending device maps, based on the rank indicator of each of the J subbands, a transmission block corresponding to the subband to a transmission layer corresponding to the subband, and maps data carried on the transmission layer corresponding to the subband to a time-frequency resource for transmission.

First, a code word corresponding to a transmission block corresponding to the i^{th} subband is mapped, based on the quantity of transmission layers that corresponds to the i^{th} subband, a common quantity of code words of the J subbands, and a predefined code-word-to-layer mapping relationship, to a transmission layer corresponding to the subband. The common quantity of code words herein is the common quantity of code words of the J subbands. To be specific, the subbands share a same quantity of code words.

Specifically, refer to a mapping table shown in Table 1 to determine a code word mapping formula.

**Table 1**

| Quantity of transmission layers | Quantity of code words | Code word mapping formula $i = 0 , 1 , … … , {M}_{symb}^{layer} - 1$ |
|---|---|---|
| 1 | 1 | ${x}^{\left(0\right)} \left(i\right) = {d}^{\left(0\right)} \left(i\right) , and {M}_{symb}^{layer} = {M}_{symb}^{\left(0\right)}$ |
| 2 | 1 | *x*⁽⁰⁾(*i*) *= d*⁽⁰⁾(2*i*), *x*^{(*1*)}(*i*) = *d*^{(*0*)}(2*i* + 1), and ${M}_{symb}^{layer} = {M}_{symb}^{\left(0\right)} / 2$ |
| 2 | 2 | *x*^{(*0*)}(*i*) = *d*^{(*0*)}(*i*), *x*^{(*1*)}(*i*) = *d*^{(*1*)}(*i*), and ${M}_{symb}^{layer} = {M}_{symb}^{\left(0\right)} = {M}_{symb}^{\left(1\right)}$ |
| 3 | 1 | *x*^{(*0*)}(*i*) = *d*^{(*0*)}(3*i*), *x*^{(*1*)}(*i*) = *d*^{(*0*)}(3*i* + 1), ${x}^{\left(2\right)} \left(i\right) = {d}^{\left(0\right)} \left(3i+2\right) , and {M}_{symb}^{layer} = {M}_{symb}^{\left(0\right)} / 3$ |
| 3 | 2 | *x*^{(*0*)}(*i*) = *d*^{(*0*)}(*i*)*, x*^{(*1*)}(*i*) = *d*^{(*1*)}(2*i*), ${x}^{\left(2\right)} \left(i\right) = {d}^{\left(1\right)} \left(2i+1\right) , and {M}_{symb}^{layer} = {M}_{symb}^{\left(0\right)} = {M}_{symb}^{\left(0\right)} / 2$ |
| 4 | 1 | *x*^{(*0*)}(*i*) = *d*^{(*0*)}(4*i*), *x*⁽¹⁾(*i*) = *d*⁽⁰⁾(4*i* + 1), x⁽²⁾(*i*) = *d*⁽⁰⁾(4*i* + 2), *x*⁽³⁾(*i*) = *d*⁽⁰⁾(4*i* + 3), and ${M}_{symb}^{layer} = {M}_{symb}^{\left(0\right)} / 3$ |
| 4 | 2 | *x*⁽⁰⁾(*i*) = *d*⁽⁰⁾(2*i*), *x*⁽¹⁾(*i*) = *d*⁽⁰⁾(2*i* + 1), *x*⁽²⁾(*i*) = *d*⁽¹⁾(2*i*), *x*⁽³⁾(*i*) = *d*⁽¹⁾(2*i* + 1), and ${M}_{symb}^{layer} = {M}_{symb}^{\left(0\right)} / 2 = {M}_{symb}^{\left(1\right)} / 2$ |

For example, the subbands of entire bandwidth have the common quantity of code words. Under assumption of the common quantity of code words, Table 1 is searched based on quantities of transmission layers (that is, the rank indicators) of the subbands for code-word-to-layer mapping. If the common quantity of code words of the subbands is 2, a rank indicator of a subband 1 is 2, and a rank indicator of a subband 2 is 3, a code word mapping formula of the subband 1 is *x*⁽⁰⁾(*i*) = *d*⁽⁰⁾(*i*), *x*⁽¹⁾(*i*) = *d*⁽¹⁾(*i*), and ${M}_{symb}^{layer} = {M}_{symb}^{\left(0\right)} = {M}_{symb}^{\left(1\right)}$ in Table 1, and a code word mapping formula of the subband 2 is *x*⁽⁰⁾(*i*) = *d*⁽⁰⁾(*i*), *x*⁽¹⁾(*i*) = *d*⁽¹⁾(2*i*), *x*⁽²⁾(*i*) = *d*⁽¹⁾(2*i* + 1), and ${M}_{symb}^{layer} = {M}_{symb}^{\left(0\right)} = {M}_{symb}^{\left(0\right)} / 2$ in Table 1.

Second, a code word corresponding to a transmission block corresponding to the i^{th} subband is mapped, based on the quantity of transmission layers that corresponds to the i^{th} subband, a quantity of code words of the i^{th} subband, and a predefined code-word-to-layer mapping relationship, to a transmission layer corresponding to the i^{th} subband. In this case, quantities of code words of the J subbands are not totally the same.

In a specific implementation, the subbands of entire bandwidth have respective quantities of code words. Table 1 is searched based on the quantities of code words and quantities of transmission layers (that is, the rank indicators) of the subbands for code-word-to-layer mapping. For example, if a quantity of code words of a virtual subband 1 is 1 and a rank indicator is 2, and a quantity of code words of a virtual subband 2 is 2 and a rank indicator is 3, a code word mapping formula of the virtual subband 1 is *x*⁽⁰⁾(*i*) = *d*⁽⁰⁾(2*i*), *x*⁽¹⁾(*i*) = *d*⁽⁰⁾(2*i* + 1), and ${M}_{symb}^{layer} = {M}_{symb}^{\left(0\right)} / 2$, and a code word mapping formula of the virtual subband 2 is *x*⁽⁰⁾(*i*) = *d*⁽⁰⁾(*i*), *x*⁽¹⁾(*i*) = *d*⁽¹⁾(2*i*), *x*⁽²⁾(*i*) = *d*⁽¹⁾(2*i* + 1), and ${M}_{symb}^{layer} = {M}_{symb}^{\left(0\right)} = {M}_{symb}^{\left(0\right)} / 2$.

Usually, a symbol stream (the data carried on the transmission layer) for modulation and coding needs to be mapped to the time-frequency resource for transmission. When different virtual subbands or subbands use different modulation and coding schemes, mapping of corresponding symbol streams is also different. An order of mapping to-be-transmitted symbol streams carried on the transmission layers corresponding to the subbands to resource units is first in an order of the subbands in frequency domain and then in an order of first frequency domain and then time domain. To be specific, a symbol stream corresponding to a first subband is mapped on a time-frequency resource corresponding to the first subband in an order of first frequency domain and then time domain, and then a symbol stream corresponding to a second subband is mapped on a time-frequency resource corresponding to the second subband in an order of first frequency domain and then time domain. Herein, the subband 1 and the subband 2 are two subbands that have an order in frequency domain, and the subband 1 is prior to the subband 2 in frequency domain.

Certainly, alternatively, the data carried on the transmission layer may be mapped to the time-frequency resource in an order of first time domain and then frequency domain. Alternatively, the data may be mapped in any other mapping manner. This is not specifically limited herein.

107: The receiving device receives data transmitted by the sending device.

In a specific implementation, the transmission layer corresponding to each of the J subbands is determined based on the rank indicator of each of the J subbands, and the time-frequency resource to which the transmission layer corresponding to the subband is mapped is determined based on the rank indicator of each of the J subbands; the data transmitted by the sending device is received on the time-frequency resource to which the transmission layer corresponding to the subband is mapped.

In an embodiment of the present invention, the sending device further sends first control information indication signaling. The first control information indication signaling is used to indicate at least one of rank information, precoding matrix information, and modulation and coding information. The rank information includes the rank indicator of each of the J subbands, the precoding matrix information includes precoding matrix information of each of the J subbands, and the modulation and coding information includes modulation and coding information of each of the J subbands. The rank indicators of the J subbands in the signaling use a differential manner; and/or the precoding matrix information of the J subbands uses a differential manner; and/or the modulation and coding information of the J subbands uses a differential manner.

Alternatively, the sending device sends second control information indication signaling, where the second control information indication signaling is used to indicate at least one of a common rank indicator of the J subbands, the precoding matrix information of the J subbands, and common modulation and coding information of the J subbands. The precoding matrix information of the J subbands may be common precoding matrix information of the J subbands or may be precoding matrix information of each of the J subbands. Specifically, the rank information may include the rank indicator, for example, a rank indicator index (Rank Indicator, RI). The precoding matrix information may include a precoding matrix indication, for example, a precoding matrix indication index (Precoding Matrix Indication, PMI). The modulation and coding information may include a modulation and coding scheme, for example, a modulation and coding scheme index (Modulation Coding Scheme, MCS).

Optionally, in another possible implementation, the second control information indication signaling is used to indicate at least one of a common rank indicator of K subbands, precoding matrix information of the K subbands, and common modulation and coding information of the K subbands. K is a positive integer less than or equal to M. When K is less than M, the K subbands share common rank information, common precoding matrix information, and the common modulation and coding information, thereby reducing feedback overheads of control signaling. Rank information, precoding matrix information, and modulation and coding information of remaining M-K subbands are sent to the receiving device by using the first control information indication signaling.

It should be noted that the rank indicator of the subband that is used by the receiving device to determine, before receiving the data transmitted by the sending device, the transmission layer corresponding to the subband may be the rank indicator of each subband that is carried in the first control information indication signaling or may be the common rank indicator of the J subbands that is carried in the second control information indication signaling.

When the rank indicators of the subbands present subband characteristics, signaling needs to be sent to independently notify rank indicator information, precoding matrix information, or modulation and coding information of each subband. A quantity of required downlink control information (Downlink Control Information, DCI) signaling bits multiplies with a quantity of subbands.

In the prior art, common rank indicator information and/or precoding matrix information of the entire bandwidth and/or common modulation and coding information of the entire bandwidth may be transmitted in a DCI format 2 or 2C, or the like. If specific control information of all newly added subbands is placed in an existing DCI format, enormous signaling overheads are required.

Therefore, specific rank indicator information and/or precoding matrix information and/or modulation and coding information of a plurality of subbands may be multiplexed in a new control information indication format. To be specific, at least one of the rank indicator information and/or the precoding matrix information and/or the modulation and coding information of the plurality of subbands is carried in a same control information indication format. In a specific implementation, a new DCI format, for example, a DCI format 5 or 5A, specifically used for multiplexing the indication information of the plurality of subbands may be defined. This design does not increase a size of an existing DCI format (such as a DCI format 2C). In addition, this design may be adaptively triggered according to scenarios and requirements. For example, sending in the DCI format 5 or 5A is triggered only when there is a requirement that different subbands have different rank indicators and/or different modulation and coding schemes and/or different precoding matrix information in a high bandwidth scenario.

Optionally, information bit domains of the rank indicator, the MCS, and a TPMI of each subband include:
layer quantity indication information of three bits;
a modulation and coding scheme indicator of five bits; and
precoding matrix indication information of two or four bits.

In addition, indication of the indication information in a DCI signaling format corresponding to rank indicators, precoding matrix information, and modulation and coding information (such as an MCS) of a plurality of subbands in the first control information indication signaling may use a differential manner. Using the MCS as an example, K MCSs use an indication manner of a common MCS plus differential MCSs in the first control information indication signaling. The common MCS herein is a same MCS shared by a plurality of subbands corresponding to the to-be-transmitted channel. A plurality of differential MCSs are differential values between MCSs of remaining subbands corresponding to the to-be-transmitted channel and the common MCS.

In the data transmission method provided in the present invention, that the sending device no longer performs data transmission based on the common rank indicator includes that the sending device no longer determines, based on the common rank indicator, the transmission block size corresponding to each subband, but determines, based on the rank indicator of each subband, the transmission block size corresponding to the subband and maps, based on the rank indicator of the subband, the transmission block to the transmission layer corresponding to the subband. The quantities of transmission layers that correspond to the subbands herein are not totally the same. In this way, differential transmission processing is performed on the subbands based on the rank indicators not totally the same that are of the subbands, to maximally satisfy requirements of different subbands, thereby improving performance of data transmission in the high bandwidth scenario.

The solutions provided in the embodiments of the present invention are described above mainly from perspectives of working processes of the sending device. It can be understood that to achieve the foregoing functions, the sending device includes corresponding hardware structures and/or software modules for executing various functions. A person of ordinary skill in the art should easily be aware that, in combination with the examples described in the embodiments disclosed in this specification, units, algorithms steps may be implemented by hardware or a combination of hardware and computer software. Whether a function is performed by hardware or hardware driven by computer software depends on particular applications and design constraints of the technical solutions.

In the embodiments of the present invention, function modules of the sending device may be divided based on the foregoing method examples. For example, various function modules may be divided corresponding to various functions, or two or more functions may be integrated in a processing module. The integrated module may be implemented in a form of hardware, or may be implemented in a form of a software functional module. It should be noted that the module division in the embodiments of the present invention is an example, and is merely logical function division. There may be other division manners in an actual implementation.

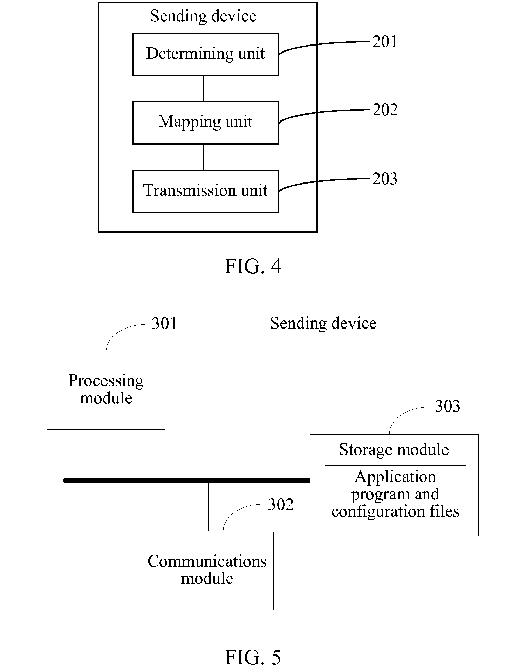

When function modules are divided corresponding to various functions, FIG. 4 is a possible schematic structural diagram of the sending device in the foregoing embodiment. The sending device includes a determining unit 201, a mapping unit 202, and a transmission unit 203. The determining unit 201 is configured to support the sending device in performing processes 104 and 105 in FIG. 3. The mapping unit 202 is configured to support the sending device in performing resource mapping in process 106 in FIG. 3. The transmission unit 203 is configured to support the sending device in performing data transmission in process 106 in FIG. 3. All related content of the steps in the foregoing method embodiments may be quoted to function descriptions of the corresponding function modules. Details are not described herein again.

When an integrated unit is used, FIG. 5 is a possible schematic structural diagram of the sending device in the foregoing embodiment. The sending device may include a processing module 301, a communications module 302, and a storage module 303. The processing module 301 is configured to control and manage actions of the sending device. For example, the processing module 301 is configured to support the sending device in performing processes 104 and 105 in FIG. 3 and/or other processes of a technology described in this specification. The communications module 302 is configured to support a sending device to communicate with other network entities, for example, perform process 106 in FIG. 3. The storage module 303 is configured to store program code and data of the storage device.

The processing module 301 may be a processor in a physical structure of the sending device shown in FIG. 2, may be a processor or a controller, and for example, may be a CPU, a general purpose processor, a DSP, an ASIC, an FPGA or another programmable logic device, a transistor logic device, a hardware component, or any combination thereof. The processing module 301 may implement or execute various examples of logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 302 may be a network interface, that is, a transmitter and a receiver, in the physical structure of the sending device shown in FIG. 2. The communications module 302 may be a communications port, or may be a transceiver, a transceiver circuit, a communications interface, or the like. The storage module 303 may be a memory in the physical structure of the sending device shown in FIG. 2.

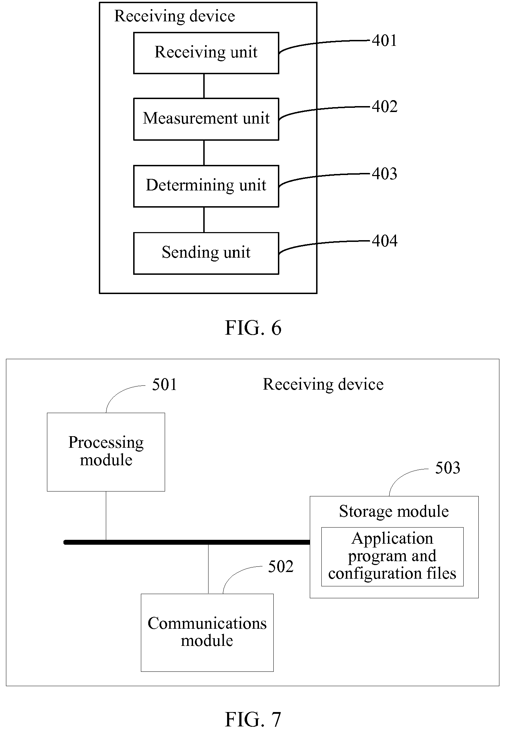

When function modules are divided corresponding to various functions, FIG. 6 is a possible schematic structural diagram of an exemplary receiving device. The receiving device includes a receiving unit 401, a measurement unit 402, a determining unit 403, and a sending unit 404. The receiving unit 401 is configured to support the receiving device in performing process 101 in FIG. 3. The measurement unit 402 is configured to support the receiving device in performing channel sounding in process 101 in FIG. 3. The determining unit 403 is configured to support the receiving device in performing data transmission in process 102 in FIG. 3. The sending unit 404 is configured to support the receiving device in performing process 103 in FIG. 3. All related content of the steps in the foregoing method embodiments may be quoted to function descriptions of the corresponding function modules. Details are not described herein again.

When an integrated unit is used, FIG. 7 is a possible schematic structural diagram of an exemplary receiving device . The receiving device may include a processing module 501, a communications module 502, and a storage module 503. The processing module 501 is configured to control and manage actions of the receiving device. For example, the processing module 501 is configured to support the receiving device in performing process 102 in FIG. 3 and/or other processes of a technology described in this specification. The communications module 502 is configured to support a storage device to communicate with other network entities, for example, perform process 103 in FIG. 3. The storage module 503 is configured to store program code and data of the storage device.

The processing module 501 may be a processor in a physical structure of the receiving device shown in FIG. 2, may be a processor or a controller, and for example, may be a CPU, a general purpose processor, a DSP, an ASIC, an FPGA or another programmable logic device, a transistor logic device, a hardware component, or any combination thereof. The processing module 501 may implement or execute various examples of logical blocks, modules, and circuits described with reference to content disclosed in the present invention. Alternatively, the processor may be a combination of processors implementing a computing function, for example, a combination of one or more microprocessors, or a combination of a DSP and a microprocessor. The communications module 502 may be a network interface, that is, a transmitter and a receiver, in the physical structure of the receiving device shown in FIG. 2. The communications module 502 may be a communications port, or may be a transceiver, a transceiver circuit, a communications interface, or the like. The storage module 503 may be a memory in the physical structure of the receiving device shown in FIG. 2.

The foregoing descriptions about implementations allow a person skilled in the art to clearly understand that, for the purpose of convenient and brief description, division of the foregoing function modules is taken as an example for illustration. In actual application, the foregoing functions can be allocated to different modules for implementation according to requirements. To be specific, an inner structure of an apparatus is divided into different function modules to implement all or some of the functions described above. For a detailed working process of the foregoing apparatus, refer to a corresponding process in the foregoing method embodiments, and details are not described herein again.

The modules described as separate components may be or may not be physically separated. Components displayed as modules may be one physical module or a plurality of physical modules, that is, may be located at one location or may be distributed at a plurality of different locations. Some or all the modules may be selected according to actual requirements to achieve the objectives of the solutions of the embodiments. In addition, functional modules in the embodiments of the present invention may be integrated into one processing module, or each of the modules may exist alone physically, or two or more modules are integrated into one module. The integrated module may be implemented in a form of hardware, or may be implemented in a form of a software functional module.

If the integrated module is implemented in a form of a software function unit and sold or used as an independent product, the module may be stored in a readable storage medium. Based on such an understanding, the technical solutions of the present invention essentially, or the part contributing to the prior art, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or a compact disc.

## Claims

1. A data transmission method performed by a sending device within the framework of 3GPP LTE, the method comprising:
• sending a reference signal to a receiving device on a transmission channel comprising J subbands, wherein the J subbands are physical subbands (S101);
• determining (S 104) a plurality of rank indicators of the J subbands corresponding to the transmission channel, wherein each subband among the J subbands has a corresponding rank indicator among the plurality of rank indicators, and at least one rank indicator among the plurality of rank indicators is different to the remaining rank indicators of the plurality of rank indicators, and J is an integer greater than or equal to 2,
wherein the determining the plurality of rank indicators of the J subbands corresponding to the transmission channel comprises:
∘ receiving the plurality of rank indicators from the receiving device;
• determining (S105), for each of the subbands among the J subbands, based on a rank indicator of the subband, a transmission block size of the subband and a quantity of transmission layers that corresponds to the subband,
wherein the determining, for each of the subbands among the J subbands, based on the rank indicator of the subband, the transmission block size of the subband and the quantity of transmission layers that corresponds to the subband comprises:
∘ using a rank indicator of an i^{th} subband in the J subbands as a quantity of transmission layers that corresponds to the i^{th} subband, wherein i is an integer greater than or equal to 1 and less than or equal to J;
∘ determining, based on the rank indicator of the i^{th} subband, a channel quality indicator, CQI, corresponding to the i^{th} subband, and determining, based on the CQI corresponding to the i^{th} subband, modulation and coding information corresponding to the i^{th} subband,
▪ wherein the modulation and coding information is a modulation and coding scheme index, MCS, index, wherein the MCS indices for a plurality of subbands among the J subbands are the same and therefore each MCS index among the MCS indices for the plurality of subbands among the J subbands is a common MCS index common to the plurality of subbands, and for the remaining subbands among the J subbands the MCS indices are different; and
∘ determining, based on the quantity of transmission layers that corresponds to the i^{th} subband, the modulation and coding information corresponding to the i^{th} subband, and a quantity of scheduling resource blocks that corresponds to the i^{th} subband, a transmission block size corresponding to the i^{th} subband;
• mapping (S106), for each subband among the J subbands, a transmission block corresponding to the subband to a transmission layer corresponding to the subband,
wherein the mapping, for each subband among the J subbands, the transmission block corresponding to the subband to the transmission layer corresponding to the subband comprises:
∘ in a first alternative, mapping, based on the quantity of transmission layers that corresponds to the i^{th} subband and a common quantity of code words of the J subbands, a code word corresponding to a transmission block corresponding to the i^{th} subband to a transmission layer corresponding to the i^{th} subband, wherein the common quantity of code words is the common quantity of code words of the J subbands; or
∘ in a second alternative instead of the first alternative, mapping, based on the quantity of transmission layers that corresponds to the i^{th} subband and a quantity of code words of the i^{th} subband, the code word corresponding to the transmission block corresponding to the i^{th} subband to the transmission layer corresponding to the i^{th} subband, wherein the quantiy of codewords of at least one subband of the J subbands is different to the quantity of codewords of the remaining subbands of the J subbands,
∘ wherein in both, the first alternative and the second alternative, the mapping is performed according to TABLE 1:
**∘ Table 1**
| Quantity of transmission layers | Quantity of code words | Code word mapping formula $i = 0 , 1 , … … , {M}_{symb}^{layer} - 1$ |
|---|---|---|
| 1 | 1 | ${x}^{\left(0\right)} \left(i\right) = {d}^{\left(0\right)} \left(i\right) , and {M}_{symb}^{layer} = {M}_{symb}^{\left(0\right)}$ |
| 2 | 1 | *x*⁽⁰⁾(*i*) = *d*⁽⁰⁾(2*i)*, *x*⁽¹⁾(*i*) = *d*⁽⁰⁾(2*i* + 1), and ${M}_{symb}^{layer} = {M}_{symb}^{\left(0\right)} / 2$ |
| 2 | 2 | *x*⁽⁰⁾(*i*) = *d*⁽⁰⁾(*i*), *x*⁽¹⁾(*i*) = *d*⁽¹⁾(*i*), and ${M}_{symb}^{layer} = {M}_{symb}^{\left(0\right)} = {M}_{symb}^{\left(1\right)}$ |
| 3 | 1 | *x*⁽⁰⁾(*i*) = *d*⁽⁰⁾(3*i*), *x*⁽¹⁾(*i*) = *d*⁽⁰⁾(3*i +* 1), ${x}^{\left(2\right)} \left(i\right) = {d}^{\left(0\right)} \left(3i+2\right) , and {M}_{symb}^{layer} = {M}_{symb}^{\left(0\right)} / 3$ |
| 3 | 2 | *x*⁽⁰⁾(*i*) = *d*⁽⁰⁾(*i*), *x*⁽¹⁾(*i*) = *d*⁽¹⁾(2*i*), ${x}^{\left(2\right)} \left(i\right) = {d}^{\left(1\right)} \left(2i+1\right) , and {M}_{symb}^{layer} = {M}_{symb}^{\left(0\right)} = {M}_{symb}^{\left(1\right)} / 2$ |
| 4 | 1 | *x*⁽⁰⁾(*i*) = *d*⁽⁰⁾(4*i*), *x*⁽¹⁾(*i*) = *d*⁽⁰⁾(4*i* + 1), *x*⁽²⁾(*i*) *= d*⁽⁰⁾(4*i* + 2), *x*⁽³⁾(*i*) = *d*⁽⁰⁾(4*i* + 3), and ${M}_{symb}^{layer} = {M}_{symb}^{\left(0\right)} / 4$ |
| 4 | 2 | *x*⁽⁰⁾(*i*) = *d*⁽⁰⁾(2*i*), *x*⁽¹⁾(*i*) = *d*⁽⁰⁾(2*i* + 1), *x*⁽²⁾(*i*) = *d*⁽¹⁾(2*i*), *x*⁽³⁾(*i*) = *d*⁽¹⁾(2*i* + 1), and ${M}_{symb}^{layer} = {M}_{symb}^{\left(0\right)} / 2 = {M}_{symb}^{\left(1\right)} / 2$ |
wherein the common quantity of code words used in the first alternative for the mapping and the quantity of code words of the i^{th} subband used in the second alternative for the mapping are both indicated in TABLE 1 by a column with the column name quantity of code words;
• mapping, for each of the J subbands, data carried on the transmission layers corresponding to the subband to a time-frequency resource for transmission;
• transmitting the data mapped to the time-frequency resources to the receiving device (S107), and
• sending first control information indication signaling to the receiving device,
▪ wherein the first control information indication signaling indicates for the plurality of subbands having the common MCS index, one single MCS index being the common MCS index and for each of the remaining subbands a differential MCS index, wherein each differential MCS index is a differential value between the common MCS index and the MCS index of the corresponding subband among the remaining subbands.

2. A sending device configured to perform the method according to claim 1.

## Patentansprüche

1. Datenübertragungsverfahren, das durch eine Sendevorrichtung innerhalb des Rahmens von 3GPP LTE durchgeführt wird, wobei das Verfahren Folgendes umfasst:
• Senden eines Referenzsignals an eine Empfangsvorrichtung auf einem Übertragungskanal, umfassend J Teilbänder, wobei die J Teilbänder physische Teilbänder (S 101) sind;
• Bestimmen (S 104) einer Vielzahl von Rangindikatoren der J Teilbänder entsprechend dem Übertragungskanal, wobei jedes Teilband unter den J Teilbändern einen entsprechenden Rangindikator unter der Vielzahl von Rangindikatoren aufweist und sich mindestens ein Rangindikator unter der Vielzahl von Rangindikatoren von den restlichen Rangindikatoren der Vielzahl von Rangindikatoren unterscheidet, und J eine ganze Zahl größer oder gleich 2 ist,
wobei das Bestimmen der Vielzahl von Rangindikatoren der J Teilbänder entsprechend dem Übertragungskanal Folgendes umfasst:
∘ Empfangen der Vielzahl von Rangindikatoren aus der Empfangsvorrichtung;
• Bestimmen (S 105) für jedes der Teilbänder unter den J Teilbändern basierend auf einem Rangindikator des Teilbandes, einer Übertragungsblockgröße des Teilbandes und einer Anzahl von Übertragungsschichten, die dem Teilband entspricht,
wobei das Bestimmen für jedes der Teilbänder unter den J Teilbändern basierend auf dem Rangindikator des Teilbandes, der Übertragungsblockgröße des Teilbandes und der Anzahl von Übertragungsschichten, die dem Teilband entspricht, Folgendes umfasst:
∘ Verwenden eines Rangindikators eines i-ten Teilbandes in den J Teilbändern als Anzahl von Übertragungsschichten, die dem i-ten Teilband entspricht, wobei i eine ganze Zahl größer oder gleich 1 und kleiner oder gleich J ist;
∘ Bestimmen eines Kanalqualitätsindikators, CQI, entsprechend dem i-ten Teilband basierend auf dem Rangindikator des i-ten Teilbands, und Bestimmen von Modulations- und Codierungsinformationen entsprechend dem i-ten Teilband basierend auf dem CQI des i-ten Teilbandes,
▪ wobei die Modulations- und Codierungsinformationen ein Modulations- und Codierungsschemaindex, MCS-Index, ist, wobei die MCS-Indizes für eine Vielzahl von Teilbändern unter den J Teilbändern gleich sind und daher jeder MCS-Index unter den MCS-Indizes für die Vielzahl von Teilbändern unter den J Teilbändern ein gemeinsamer MCS-Index ist, welcher der Vielzahl von Teilbändern gemeinsam ist, und sich die MCS-Indizes für die restlichen Teilbänder unter den J Teilbändern unterscheiden; und
∘ Bestimmen der Modulations- und Codierungsinformationen entsprechend dem i-ten Teilband basierend auf der Anzahl von Übertragungsschichten, die dem i-ten Teilband entspricht, und einer Anzahl von Planungsressourcenblöcken, die dem i-ten Teilband entspricht, einer Übertragungsblockgröße, die dem i-ten Teilband entspricht;
• Abbilden (S 106) eines Übertragungsblocks entsprechend dem Teilband für jedes Teilband unter den J Teilbändern auf einer Übertragungsschicht entsprechend dem Teilband,
wobei das Abbilden des Übertragungsblocks entsprechend dem Teilband für jedes Teilband unter den J Teilbändern auf der Übertragungsschicht entsprechend dem Teilband Folgendes umfasst:
∘ in einer ersten Alternative, Abbilden eines Codeworts entsprechend einem Übertragungsblock entsprechend dem i-ten Teilband einer Übertragungsschicht entsprechend dem i-ten Teilband basierend auf der Anzahl von Überragungsschichten, die dem i-ten Teilband und einer gemeinsamen Anzahl von Codewörtern der J Teilbänder entspricht, wobei die gemeinsame Anzahl von Codewörtern die gemeinsame Anzahl von Codewörtern der J Teilbänder ist; oder
∘ in einer zweiten Alternative anstelle der ersten Alternative, Abbilden des Codeworts entsprechend einem Übertragungsblock entsprechend dem i-ten Teilband einer Übertragungsschicht entsprechend dem i-ten Teilband basierend auf der Anzahl von Übertragungsschichten, die dem i-ten Teilband und einer Anzahl von Codewörtern des i-ten Teilbandes entspricht, wobei sich die Anzahl von Codewörtern mindestens ein Teilband der J Teilbänder von der Anzahl von Codewörtern der restlichen Teilbänder der J Teilbänder unterscheidet,
∘ wobei das Abbilden sowohl in der ersten Alternative als auch der zweiten Alternative gemäß TABELLE 1 durchgeführt wird:
**o Tabelle 1**
| Anzahl von Übertragungsschichten | Anzahl von Codewörtern | Formel zum Abbilden von Codewörtern $i = 0 , 1 , … … , {M}_{Symb}^{Schicht} - 1$ |
|---|---|---|
| 1 | 1 | ${x}^{\left(0\right)} \left(i\right) = {d}^{\left(0\right)} \left(i\right) und {M}_{Symb}^{Schicht} = {M}_{Symb}^{\left(0\right)}$ |
| 2 | 1 | *x*⁽⁰⁾(*i*) = *d*⁽⁰⁾(2*i*),*x*⁽¹⁾(*i*) = *d*⁽⁰⁾(2*i* + 1) und ${M}_{Symb}^{Schicht} = {M}_{Symb}^{\left(0\right)} / 2$ |
| 2 | 2 | *x*⁽⁰⁾(*i*) = *d*⁽⁰⁾(*i*),*x*⁽¹⁾(*i*) = *d*⁽¹⁾(*i*) und ${M}_{Symb}^{Schicht} = {M}_{Symb}^{\left(0\right)} = {M}_{Symb}^{\left(1\right)}$ |
| 3 | 1 | *x*⁽⁰⁾(*i*) = *d*⁽⁰⁾(3*i*),*x*⁽¹⁾(*i*) *= d*⁽⁰⁾(3*i* + 1), ${x}^{\left(2\right)} \left(i\right) = {d}^{\left(0\right)} \left(3i+2\right) und {M}_{Symb}^{Schicht} = {M}_{Symb}^{\left(0\right)} /$ |
| 3 | 2 | *x*⁽⁰⁾(*i*) = *d*⁽⁰⁾(*i*),*x*⁽¹⁾(*i*) = *d*⁽¹⁾(2*i*), ${x}^{\left(2\right)} \left(i\right) = {d}^{\left(1\right)} \left(2i+1\right) und {M}_{Symb}^{Schicht} = {M}_{Symb}^{\left(0\right)}$ |
| 4 | 1 | *x*⁽⁰⁾(*i*) = *d*⁽⁰⁾(4*i*),*x*⁽¹⁾(*i*) = *d*⁽⁰⁾(4*i* + 1), *x*⁽²⁾(*i*) = *d*⁽⁰⁾(4*i* + 2),*x*⁽³⁾(*i*) = *d*⁽⁰⁾(4*i* + 3)ur ${M}_{Symb}^{Schicht} = {M}_{Symb}^{\left(0\right)} / 4$ |
| 4 | 2 | *x*⁽⁰⁾(*i*) = *d*⁽⁰⁾(2*i*),*x*⁽¹⁾(*i*) = *d*⁽⁰⁾(2*i* + 1), *x*⁽²⁾(*i*) = *d*⁽¹⁾(2*i*),*x*⁽³⁾(*i*) = *d*⁽¹⁾(*2i* + 1)und ${M}_{Symb}^{Schicht} = {M}_{Symb}^{\left(0\right)} / 2 = {M}_{Symb}^{\left(1\right)} / 2$ |
wobei die gemeinsame Anzahl von Codewörtern, die in der ersten Alternative für das Abbilden verwendet wird, und die Anzahl von Codewörtern des i-ten Teilbandes, die in der zweiten Alternative für das Abbilden verwendet wird, beide in TABELLE 1 durch eine Spalte mit der Spaltennamenanzahl von Codewörtern angegeben werden;
• Abbilden von Daten, die auf den Übertragungsschichten entsprechend dem Teilband enthalten sind, auf einer Zeit-Frequenz-Ressource zur Übertragung für jedes der J Teilbänder;
• Übertragen der Daten, die auf den Zeit-Frequenz-Ressourcen abgebildet sind, an die Empfangsvorrichtung (S 107), und
• Senden einer ersten Signalisierung von Steuerinformationsanzeigen an die Empfangsvorrichtung,
▪ wobei die erste Signalisierung von Steuerinformationsanzeigen für die Vielzahl von Teilbändern, die den gemeinsamen MCS-Index aufweist, anzeigt, dass ein einziger MCS-Index der gemeinsame MCS-Index ist und für jedes der restlichen Teilbänder ein differentieller MCS-Index ist, wobei jeder differentielle MCS-Index ein Differenzwert zwischen dem gemeinsamen MCS-Index und dem MCS-Index des entsprechenden Teilbandes unter den übrigen Teilbändern ist.

2. Sendevorrichtung, die dazu konfiguriert ist, das Verfahren nach Anspruch 1 durchzuführen.

## Revendications

1. Procédé de transmission de données mis en œuvre par un dispositif d'envoi dans le cadre de la norme 3GPP LTE, le procédé comprenant :
• l'envoi d'un signal de référence à un dispositif de réception sur un canal de transmission comprenant J sous-bandes, dans lequel les J sous-bandes sont des sous-bandes physiques (S 101) ;
• la détermination (S 104) d'une pluralité d'indicateurs de rang des J sous-bandes correspondant au canal de transmission, dans lequel chaque sous-bande parmi les J sous-bandes a un indicateur de rang correspondant parmi la pluralité d'indicateurs de rang, et au moins un indicateur de rang parmi la pluralité d'indicateurs de rang est différent des indicateurs de rang restants de la pluralité d'indicateurs de rang, et J est un entier supérieur ou égal à 2,
dans lequel la détermination de la pluralité d'indicateurs de rang des sous-bandes J correspondant au canal de transmission comprend :
∘ la réception de la pluralité d'indicateurs de rang en provenance du dispositif de réception ;
• la détermination (S 105), pour chacune des sous-bandes parmi les J sous-bandes, sur la base d'un indicateur de rang de la sous-bande, d'une taille de bloc de transmission de la sous-bande et d'une quantité de couches de transmission qui correspond à la sous-bande,
dans lequel la détermination, pour chacune des sous-bandes parmi les J sous-bandes, sur la base de l'indicateur de rang de la sous-bande, de la taille de bloc de transmission de la sous-bande et de la quantité de couches de transmission correspondant à la sous-bande comprend :
∘ l'utilisation d'un indicateur de rang d'une i^{ème} sous-bande dans les J sous-bandes comme une quantité de couches de transmission qui correspond à la i^{ème} sous-bande, dans lequel i est un entier supérieur ou égal à 1 et inférieur ou égal à J ;
∘ la détermination, sur la base de l'indicateur de rang de la i^{ème} sous-bande, d'un indicateur de qualité de canal, CQI, correspondant à la i^{ème} sous-bande, et la détermination, sur la base du CQI correspondant à la i^{ème} sous-bande, des informations de modulation et de codage correspondant à la i^{ème} sous-bande,
▪ dans lequel les informations de modulation et de codage sont un indice de schéma de modulation et de codage, indice MCS, dans lequel les indices MCS pour une pluralité de sous-bandes parmi les J sous-bandes sont identiques et donc chaque indice MCS parmi les indices MCS pour la pluralité de sous-bandes parmi les J sous-bandes est un indice MCS commun à la pluralité de sous-bandes, et pour les sous-bandes restantes parmi les J sous-bandes, les indices MCS sont différents ; et
∘ la détermination, sur la base de la quantité de couches de transmission correspondant à la i^{ème} sous-bande, des informations de modulation et de codage correspondant à la i^{ème} sous-bande et d'une quantité de blocs de ressources de planification correspondant à la i^{ème} sous-bande, une taille de bloc de transmission correspondant à la i^{ème} sous-bande ;
• le mappage (S 106), pour chaque sous-bande parmi les J sous-bandes, d'un bloc de transmission correspondant à la sous-bande vers une couche de transmission correspondant à la sous-bande, dans lequel le mappage, pour chaque sous-bande parmi les J sous-bandes, du bloc de transmission correspondant à la sous-bande vers la couche de transmission correspondant à la sous-bande comprend :
∘ dans une première alternative, le mappage, sur la base de la quantité de couches de transmission correspondant à la i^{ème} sous-bande et d'une quantité commune de mots de code des J sous-bandes, d'un mot de code correspondant à un bloc de transmission correspondant à la i^{ème} sous-bande vers une couche de transmission correspondant à la i^{ème} sous-bande, dans lequel la quantité commune de mots de code est la quantité commune de mots de code des J sous-bandes ; ou
○ dans une seconde alternative, au lieu de la première alternative, le mappage, sur la base de la quantité de couches de transmission correspondant à la i^{ème} sous-bande et d'une quantité de mots de code de la i^{ème} sous-bande, du mot de code correspondant au bloc de transmission correspondant à la i^{ème} sous-bande vers la couche de transmission correspondant à la i^{ème} sous-bande, dans lequel la quantité de mots de code d'au moins une sous-bande des J sous-bandes est différente de la quantité de mots de code des sous-bandes restantes des J sous-bandes,
○ dans lequel, dans les deux cas, la première alternative et la seconde alternative, le mappage est effectué conformément au TABLEAU 1 :
**∘ Tableau 1**
| Quantité de couches de transmission | Quantité de mots de code | Formule de mappage des mots de code $i = 0 , 1 , … , {M}_{symb}^{couche} - 1$ |
|---|---|---|
| 1 | 1 | ${x}^{\left(0\right)} \left(i\right) = {d}^{\left(0\right)} \left(i\right) , et {M}_{symb}^{couche} = {M}_{symb}^{\left(0\right)}$ |
| 2 | 1 | *x*⁽⁰⁾(*i*) = *d*⁽⁰⁾(2*i*),*x*⁽¹⁾(*i*) = *d*⁽⁰⁾(2*i* + 1), et ${M}_{symb}^{couche} = {M}_{symb}^{\left(0\right)} / 2$ |
| 2 | 2 | *x*⁽⁰⁾(*i*) = *d*⁽⁰⁾(*i*),*x*⁽¹⁾(*i*) = *d*⁽¹⁾(*i*), et ${M}_{symb}^{couche} = {M}_{symb}^{\left(0\right)} = {M}_{symb}^{\left(1\right)}$ |
| 3 | 1 | *x*⁽⁰⁾(*i*) = *d*⁽⁰⁾(3*i*),*x*⁽¹⁾(*i*) = *d*⁽⁰⁾(3*i* + 1), ${x}^{\left(2\right)} \left(i\right) = {d}^{\left(0\right)} \left(3i+2\right) , et {M}_{symb}^{couche} = {M}_{symb}^{\left(0\right)} / 3$ |
| 3 | 2 | *x*⁽⁰⁾(*i*) = *d*⁽⁰⁾(*i*),*x*⁽¹⁾(*i*) = *d*⁽¹⁾(2*i*), ${x}^{\left(2\right)} \left(i\right) = {d}^{\left(1\right)} \left(2i+1\right) , et {M}_{symb}^{couche} = {M}_{symb}^{\left(0\right)} = {M}_{symb}^{\left(1\right)} / 2$ |
| 4 | 1 | *x*⁽⁰⁾(*i*) = *d*⁽⁰⁾(4*i*),*x*⁽¹⁾(*i*) = *d*⁽⁰⁾(4*i* + 1), *x*⁽²⁾(*i*) = *d*⁽⁰⁾(4*i* + 2),*x*⁽³⁾(*i*) = *d*⁽⁰⁾(4*i* + 3), et ${M}_{symb}^{couche} = {M}_{symb}^{\left(0\right)} / 4$ |
| 4 | 2 | *x*⁽⁰⁾(*i*) *= d*⁽⁰⁾(2*i*),*x*⁽¹⁾(*i*) = *d*⁽⁰⁾(2*i* + 1), *x*⁽²⁾(*i*) = *d*⁽¹⁾(2*i*),*x*⁽³⁾(*i*) = *d*⁽¹⁾(2*i* + 1), et ${M}_{symb}^{couche} = {M}_{symb}^{\left(0\right)} / 2 = {M}_{symb}^{\left(1\right)} / 2$ |
dans lequel la quantité commune de mots de code utilisés dans la première alternative pour le mappage et la quantité de mots de code de la i^{ème} sous-bande utilisée dans la seconde alternative pour le mappage sont toutes deux indiquées dans le TABLEAU 1 par une colonne portant le nom de colonne quantité de mots de code ;
• le mappage, pour chacune des J sous-bandes, de données transportées sur les couches de transmission correspondant à la sous-bande vers une ressource temps-fréquence pour la transmission ;
• la transmission des données mappées aux ressources temps-fréquence vers le dispositif de réception (S 107), et
• l'envoi de la première signalisation d'indication d'information de contrôle au dispositif récepteur,
▪ dans lequel la première signalisation d'indication d'information de contrôle indique, pour la pluralité de sous-bandes ayant l'indice MCS commun, un seul indice MCS étant l'indice MCS commun, et pour chacune des sous-bandes restantes, un indice MCS différentiel, dans lequel chaque indice MCS différentiel est une valeur différentielle entre l'indice MCS commun et l'indice MCS de la sous-bande correspondante parmi les sous-bandes restantes.

2. Dispositif d'envoi configuré pour exécuter le procédé selon la revendication 1.
